(19) Europäisches Patentamt
European Patent Office
Office européen des brevets

(11) Veröffentlichungsnummer: **0 026 809**
**B1**

(12) # EUROPÄISCHE PATENTSCHRIFT

(45) Veröffentlichungstag der Patentschrift: **04.05.83**

(51) Int. Cl.³: **C 08 G 8/20,** C 09 D 3/54, C 09 D 3/56

(21) Anmeldenummer: **80103192.3**

(22) Anmeldetag: **09.06.80**

(54) **Verfahren zur Herstellung von Resolharzen und deren Verwendung zur Herstellung von Lackfilmen.**

(30) Priorität: **20.06.79 DE 2924808**
**09.11.79 DE 2945240**

(43) Veröffentlichungstag der Anmeldung: **15.04.81 Patentblatt 81/15**

(45) Bekanntmachung des Hinweises auf die Patenterteilung: **04.05.83 Patentblatt 83/18**

(84) Benannte Vertragsstaaten: **AT DE FR GB IT NL**

(56) Entgegenhaltungen:
**GB-A-742 461**
**GB-A-1 417 437**
**GB-A-1 431 873**

(73) Patentinhaber: **BAYER AG, *Zentralbereich Patente,* Marken und Lizenzen, D-5090 Leverkusen 1, Bayerwerk (DE)**

(72) Erfinder: **Freitag, Dieter, Dr., Hasenheide 10, D-4150 Krefeld 1 (DE)**
Erfinder: **Beer, Wolfgang, Dr., Heyenfeldweg 132, D-4150 Krefeld 1 (DE)**
Erfinder: **Senge, Ferdinand, Dr., Deswatinesstrasse 16, D-4150 Krefeld 1 (DE)**

**EP 0 026 809 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von Resolharzen und deren Verwendung zur Herstellung von Lackfilmen

Phenolformaldehydharze sind seit langem bekannt. Man unterscheidet sauer und alkalisch kondensierte Harze, für die jeweils die Bezeichnung Novolake und Resole benutzt wird. Unter Novolaken versteht man Harze ohne Methylolgruppen, die in saurem Milieu mit einem Phenolüberschuß hergestellt werden. Resole sind Harze mit freien Methylolgruppen, die in alkalischem Milieu mit einem Formaldehydüberschuß hergestellt werden. Sie härten beim Erhitzen.

Man unterscheidet bei Resolen den A-, B- und C-Zustand; das Harz geht vom schmelzbaren und löslichen A-Zustand (Resol) in den unlöslichen und gummiartigen, aber in Lösungsmittel quellbaren B-Zustand (Resitol), und schließlich in den nicht-schmelzenden, unlöslichen festen C-Zustand (Resit) über.

Phenolformaldehydharze im ausgehärteten Zustand sind gegen organische Lösungsmittel, verdünnte Säuren und Alkalien sehr beständig und werden deshalb in großen Mengen, z. B. als Schutzüberzüge für Metall und Holz, als Schaumstoffe mit feiner Porenstruktur für Isolierungszwecke, als Gießharz, Preßmassen, Drahtüberzüge, Klebstoffe, und zum Imprägnieren von Geweben verwendet. Für viele Zwecke sind die üblichen Phenolformaldehydharze allerdings ungeeignet, weil sie leicht dunkelgefärbte Filme bilden und sehr spröde sind. Um eine bessere Elastitizität und damit eine bessere Tiefziehfähigkeit für eingebrannte Phenolharzfilme zu erzielen, verwendet man Mischungen aus Phenolharzen mit mindestens 50% eines Epoxidharzes. Dadurch verschlechtert sich die allgemeine Widerstandsfähigkeit bei 121°C gegen Wasserdampf (Sterilisiertest), besonders aber gegen organische Agentien.

Resite auf der Basis von Bisphenol A haben eine hellere Farbe als Resite auf Basis von Phenol. Auf Metall sind solche Resite und Resitepoxidharzkombinationen nicht gleichzeitig farblos und sterilisierbar.

Gegenstand der Erfindung ist ein Verfahren zur Herstellung von Resolharzen durch Umsetzung von Bisphenol A mit Formaldehyd in Gegenwart von Butanol oder Iso-Butanol, das dadurch gekennzeichnet ist, daß man pro Mol Bisphenol A 1,2 bis 1,8 Mol Formaldehyd einsetzt, und daß man die Umsetzung in Gegenwart eines Tri-Alkaliphosphats als Katalysator durchführt. Ein weiterer Gegenstand der Erfindung ist die Verwendung der auf diese Weise erhaltenen Resole als Überzugsmittel für Metalle, gegebenenfalls in Kombination mit Epoxidharzen.

Unter Bisphenol A im Sinne dieser Erfindung wird reines Bisphenol A und sogenanntes Bisphenol A II. Qualität verstanden. Bisphenol II. Qualität ist ein Gemisch, das wenigstens 96 Gew.-% Bisphenol A enthält und höchstens 4 Gew.-% eines oder mehrerer Bisphenole einer der folgenden Formeln:

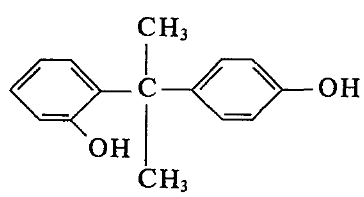

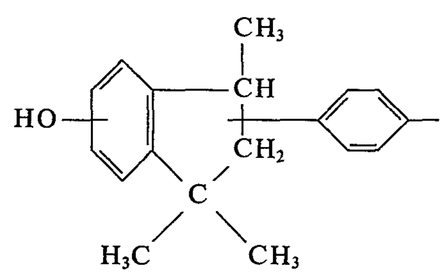

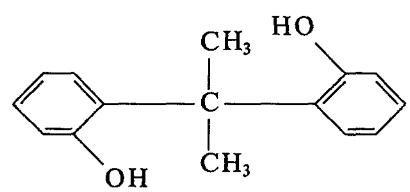

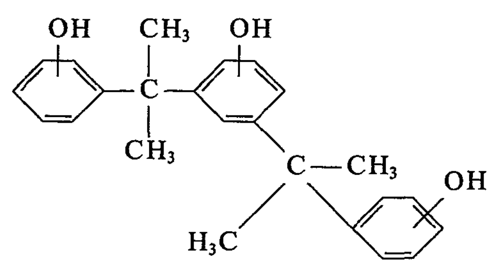

Es handelt sich hier um das Rohprodukt, das bei der sauer katalysierten Umsetzung von Phenol mit Aceton ohne besondere Reinigung anfällt.

Die erfindungsgemäß hergestellten Resolharze sind für sich allein und in Kombination mit Epoxidharzen nach Aushärtung tiefziehfähig, sterilisierbar und chemikalienresistent.

Diese Resole können durch mehrstündiges Erhitzen von einem Mol Bisphenol mit 1,2 bis 1,8 Mol Formaldehyd (als 30 bis 35%ige wäßrige Lösung) in Isobutanol oder Butanol als Lösungsmittel erhalten werden. Als Katalysatoren werden Tri-Alkaliphosphate benutzt, besonders eignen sich Tri-Natriumphosphat und Tri-Kaliumphosphat in reiner und in hydratisierter Form. Die Menge der Katalysatoren entspricht bevorzugt 0,5 bis 0,8 Gew.-% Alkaliionen, bezogen auf 1 Mol Bisphenol. Die Umsetzung wird im allgemeinen bei 80 bis 110, bevorzugt 90 bis 100° C durchgeführt. Sie dauert 3 bis 8, bevorzugt 5 bis 6 Stunden.

Die Aufarbeitung des Reaktionsgemisches ist denkbar einfach. Nach Reaktionsende wird mit verdünnter Phosphorsäure ein pH-Wert von 2 bis 2,5 eingestellt, die wäßrige Phase wird abgetrennt, die organische Phase dann bei einem pH von 2 durch azeotrope Destillation von Restmengen an Wasser befreit und bis zum gewünschten Feststoff aufkonzentriert.

Die Härtung des Resols zum Resit erfolgt aus einer Lösung des Resols mit Zusatz von Epoxidharz (wie Epikote 1007 der Shell) in einem typischen Lacklösungsmittel, wie Butanol, Isobutanol, Benzol/Butanol, Ethylacetat, Xylol, Ethylglykolacetat oder Methyl-Ethyl-Keton, die als dünner Film auf eine Metallfläche aufgebracht wird. Der Lösung können die üblichen verlaufsfördernden Mittel zugesetzt werden. Durch Erhitzung auf 100 bis 300° C, vorzugsweise auf 120 bis 200° C, erhält man einen unlöslichen Lack, der die oben angegebenen Eigenschaften besitzt. Die Härtung kann auch in Gegenwart von katalytischen Mengen von Säuren, wie Phosphorsäure, Oxalsäure, p-Toluolsulfonsäure, Borsäure oder Milchsäure, durchgeführt werden.

Die erfindungsgemäß hergestellten Resole eignen sich auch zur Herstellung von Blöcken, Platten, Stangen, Rohren und Profilteilen (Anwendung als Gießharze), zur Herstellung von Schaumstoffen und, unter Druck und Hitze mit oder ohne Füllstoffe, zur Herstellung von Preßkörpern.

Auch auf den sonstigen Anwendungsgebieten für Resolharze aus Phenol lassen sich die Resole vorteilhaft einsetzen. Die Resite eignen sich außerdem vorzüglich für Elektroisolierzwecke.

In den folgenden Beispielen sind Prozente und Teile immer Gewichtsprozent und Gewichtsteile.

## Beispiel 1

1596 g (7 Mol) Bisphenol A und 44 g $Na_3PO_4 \cdot 12\,H_2O$ (0,5 Gew.-% $Na^{\oplus}$, bezogen auf Bisphenol A, werden in 1596 g n-Butanol bei 62°C gelöst. Nach Zugabe von 910 g (9,1 Mol) 30%iger wäßriger Formaldehydlösung (danach pH=9) wird in 1 Stunde auf 91°C erhitzt und 5,5 Stunden bei 91°C bis 96° C unter Rückfluß gerührt. Der pH-Wert ist dann 7 und kein freies Formaldehyd ist mehr vorhanden. Dann wird mit 49 g 85%iger Phosphorsäure ein pH von 2–2,5 eingestellt, 1 Stunden bei 90° C absitzen lassen, und danach ~318 g wäßrige Phase (unten) abgetrennt. Die organische Phase wird anschließend 6 Stunden bei 42 bis 52°C Sumpftemperatur/150–154,6 mbar azeotrop entwässert (476 g Wasser). Die organische Lösung wird durch Abdestillieren von ca. 270 g n-Butanol bei 48–55° C/26,7 mbar auf ~60% Feststoff aufkonzentriert und filtriert.

Erhalten werden:

2988 g Resolharz, 63gew.-%ig in n-Butanol
Viskosität einer 60%igen Lösung ~540 m · Pa s
Phenol-frei
Formaldehyd-frei

## Beispiel 2

Wie Beispiel 1, jedoch mit 25,3 g $K_3PO_4 \cdot 3\,H_2O$ (≙0,7 Gew.-% $K^{\oplus}$, bezogen auf Bisphenol A, als Katalysator.

Ausbeute 3115 g Resolharz, 60,5%ig in n-Butanol
Viskosität einer 60%igen Lösung ~570 m · Pa s
Phenol-frei
Formaldehyd-frei

## Beispiel 3

Wie Beispiel 1, jedoch mit 1050 g (10,5 Mol) Formaldehyd.

Ausbeute 3240 g Resolharz, 60%ig in n-Butanol
Viskosität 553 m · Pa s
Phenol-frei
Formaldehyd-frei

## Beispiel 4

Wie Beispiel 1, jedoch mit einem Bisphenol A II. Qualität.
Die Viskosität der 60,7 – 61,3%igen n-butanolischen Resolharzlösung liegt bei 758 m · Pa s.

## Beispiel 5

Wie Beispiel 1, jedoch in Isobutanol als Lösungsmittel.
Die Viskosität der 58,8 – 59,0%igen isobutanolischen Resolharzlösung liegt bei 1562 m · Pa s.

## Vergleichsbeispiel

Ausführung wie Beispiel 1, jedoch mit 0,5 Gew.-% $Na^{\oplus}$ in Form von wäßriger Natronlauge als Katalysator (pH 9 vor Reaktionsbeginn).
Härtung der Resol-Epoxidharz-Kombinationen (aus 60%igen Lösungen in Butanol) zu Resiten und Eigenschaften der Resite.

## Einbrennbedingungen

10 Minuten 200°C unter Zusatz von 0,6% Phosphorsäure, bezogen auf feste Bindemittelkombinationen, und unter Mitverwendung von 0,2% eines Silikonharzes BYK 300, bezogen auf Lackrezeptur.
Das Verhältnis Resolharz : Epoxidharz (Epikote 1007 der Shell) wurde dabei so gewählt, daß nach 100 Doppelhüben mit einem mit Methyl-Ethyl-Keton getränkten Wattebausch unter 9,81N Belastung der Lackfilm hart bleibt.

## Beispiel 6

Beispiel 1 wird wiederholt, aber statt 910 g werden 1260 g der 30%igen wäßrigen Formaldehydlösung zugefügt.

Ausbeute 3279 g Resolharz, 61%ig in n-Butanol,
Phenol-frei
Formaldehyd-frei

Die physikalischen Eigenschaften entsprechen denen des Beispiels 2.

| | Beispiel | | | | | Vergleichsbeispiel |
|---|---|---|---|---|---|---|
| | 1 | 2 | 3 | 4 | 5 | |
| Verhältnis Resolharz : Epoxidharz (Epikote 1007 der Shell) | 40 : 60 | 40 : 60 | 35 : 65 | 35 : 65 | 35 : 65 | 40 : 60 |
| Austragsmenge g/m$^2$ | 5,9 | 6,4 | 6,9 | 6,3 | 6,6 | 6,6 |
| Tiefzug*) – 25 mm | | | | | | |
| Radien am Prüfkörper | | | | | | |
| 10 mm | 3–4 | 3–4 | 3–4 | 3–4 | 3–4 | 5 |
| 15 mm | 1–2 | 2–3 | 3 | 1 | 0–1 | 5 |
| 20 mm | 0 | 0 | 0 | 0 | 0 | 1–2 |
| 25 mm | 0 | 0 | 0 | 0 | 0 | 0 |
| Sterilisationsfestigkeit*) | | | | | | |
| Radien am Prüfkörper | | | | | | |
| 10 mm | 4 | 4 | 4 | 4 | 3–4 | 5 |
| 15 mm | 3 | 3 | 3–4 | 1 | 1–2 | 5 |
| 20 mm | 0 | 0 | 0 | 0 | 0 | 3 |
| 25 mm | 0 | 0 | 0 | 0 | 0 | 2 |

*) Bewertung nach DIN 53 230
0 = bester Wert
5 = schlechtester Wert

## Patentansprüche

1. Verfahren zur Herstellung von Resolharzen durch Umsetzung von Bisphenol A mit Formaldehyd in Gegenwart von Butanol oder Isobutanol, dadurch gekennzeichnet, daß man pro Mol Bisphenol A 1,2 bis 1,8 Mol Formaldehyd einsetzt, und daß man die Umsetzung in Gegenwart eines Trialkaliphosphats als Katalysator durchführt.

2. Verwendung der Resolharze gemäß Anspruch 1, gegebenenfalls in Kombination mit Epoxidharzen, zur Herstellung von tiefziehfähigen, sterilisierbaren und chemikalienresistenten Lackfilmen.

## Claims

1. Process for the preparation of resol resins by reacting bisphenol A with formaldehyde in the presence of butanol or isobutanol, characterised in that 1.2 to 1.8 moles of formaldehyde are used per mole of bisphenol A and in that the reaction is carried out in the presence of a tri-alkali metal phosphate as catalyst.

2. Use of the resol resins according to Claim 1, optionally in combination with epoxy resins, for the preparation of deep-drawable, sterilisable and chemical-resistant lacquer films.

## Revendications

1. Procédé de préparation de résines de résoles par réaction du bisphénol A avec le formaldéhyde en présence de butanol ou d'isobutanol, caractérisé en ce que l'on utilise de 1,2 à 1,8 mole de

formaldéhyde par mole de bisphénol et en ce que l'on effectue la réaction en présence d'un phosphate trialcalin qui sert de catalyseur.

2. Utilisation des résines de résoles selon la revendication 1, éventuellement en combination avec des résines époxydiques, pour l'application de pellicules de vernis emboutissables, stérilisables et résistantes aux agents chimiques.